**Europäisches Patentamt**

**European Patent Office**

**Office européen des brevets**

(19)

(11) Publication number : **0 308 271 B1**

## EUROPEAN PATENT SPECIFICATION

(12)

(45) Date of publication of patent specification :
**02.01.92 Bulletin 92/01**

(51) Int. Cl.⁵ : **B60D 1/14**

(21) Application number : **88308649.8**

(22) Date of filing : **19.09.88**

(54) Drawbar assembly.

(30) Priority : **18.09.87 GB 8722042**

(43) Date of publication of application :
**22.03.89 Bulletin 89/12**

(45) Publication of the grant of the patent :
**02.01.92 Bulletin 92/01**

(84) Designated Contracting States :
**DE FR LU NL SE**

(56) References cited :
**EP-A- 0 077 191**
**DE-A- 1 944 944**
**GB-A- 1 274 574**

(73) Proprietor : **INTERMEC HOLDINGS LIMITED**
**Stockley Road**
**Heddington near Calne, Wiltshire (GB)**

(72) Inventor : **Robinson, Richard Eady**
**Paddock Farm**
**Heddington Near Clane Wiltshire (GB)**

(74) Representative : **Eder, Ephry**
**E. EDER & CO. 39 Cranbrook Road**
**Ilford Essex IG1 4NH (GB)**

## Description

The present invention relates to a drawbar assembly (as specified in the preamble of Claim 1 and of the kind disclosed, for example, in published patent application EPA1-0077191) for agricultural tractors and other vehicles, and to a vehicle including such an assembly.

Tractors often need to be capable of connection, on the one hand, to ordinary heavy trailers providing relatively high loading on the hitch (i.e. the tractor's coupling device) and, on the other hand, to equipment requiring connection to a power take-off (PTO) shaft of the tractor. Because of the geometry of the tractor's PTO drive shaft, hitch positions at standardised distances from the end of the PTO shaft are required to ensure correct joint phasing. But this is generally not suitable or convenient for coupling an ordinary, heavy trailer. Thus it is known to provide a drawbar assembly that provides a hook for engaging an ordinary trailer ; and a straight drawbar with a clevis for attaching the equipment requiring the PTO connection. But changing between the two modes of connection is generally difficult. For engaging the trailer with the tractor's hook the tractor driver has to be able to see both the hook and the trailer's towing ring (or "eye"), and this requirement imposes constraints on the design of the hook and on the method of its use. Furthermore, the hooking of a trailer tends to be unreliable, in that the connection may not be very secure (especially since heavy trailers may exert upward forces on the tractor rather than downward forces, e.g. when tipping compacted grass).

According to one aspect of the present invention there is provided a drawbar assembly comprising a first portion provided with an engagement pin, and a second portion connected to the first portion remote from said engagement pin and such as to be movable relative to the first portion in a vertical plane ; wherein said second portion comprises a drawbar provided with first and second longitudinally spaced apertures located at respectively outer and inner locations of the drawbar, the drawbar being longitudinally displaceable such that said apertures can selectively confront the pin and such that (a) when the drawbar is in a retracted configuration, a towing ring of a heavy trailer or other article to be connected is engageable by causing the engagement pin to project through the ring and into the said first aperture, and (b) the drawbar is retainable in an extended configuration by engagement of the engagement pin in the said second aperture, the outer end of the drawbar then being engageable with a towed implement or other article to be connected (possibly using the said first aperture).

Preferably the first and second portions are pivotally connected to one another remote from said engagement pin and such as to be movable as aforesaid. Alternatively they may be mounted for parallel separation and approach.

Preferably the drawbar assembly comprises releasably engageable latch means to lock the first and second portions together with said engagement pin engaged in a selected aperture.

Preferably the drawbar assembly comprises guide means for assisting in location of a towing ring of a trailer. Thus, with the drawbar in its withdrawn configuration and the first and second portions pivoted apart, the ring can be approximately located between the portions which can then be pivoted towards one another, whereupon the guide means guide the towing ring to the pin engagement position.

Advantageously the drawbar is provided adacent its outer end with a seating having a shape conforming substantially to the shape of a conventional towing ring of a trailer. Preferably the seating has a circumferentially concave portion to accomodate a generally toroidal towing ring.

Preferably the second portion comprises a frame, the drawbar being longitudinally displaceable relative to the frame and selectively positionable in one of a plurality of angular positions relative to the frame. Preferably the drawbar also has a rearward aperture, further from the first aperture than from the second aperture, and the said frame has at least one corresponding aperture such that the frame and drawbar are connectable by another pin extending through the drawbar's rearward aperture and the frame's corresponding aperture. The frame may have a plurality of laterally spaced apertures so that, in the extended configuration of the drawbar, the latter can pivot about the said engagement pin of the first portion to a plurality of angular positions in each of which it may be held by passing said other pin through the rear aperture of the drawbar into a selected one of said laterally spaced apertures of the pivoted frame.

In another aspect the invention provides a tractor including such a drawbar assembly.

By way of non-limiting example, embodiments of the invention will now be described with reference to the accompanying drawings of which :

| | |
|---|---|
| Figure 1 | is a plan view of a drawbar assembly in a first embodiment of the invention, with the drawbar in its extended configuration ; |
| Figure 2 | is a side elevation corresponding to Fig. 1 ; |
| Figure 3 | is an end elevation corresponding to Figs 1 and 2 ; |
| Figures 4 and 5 | are plan and side elevation views corresponding to Figs. 1 and 2 but showing the drawbar in its retracted configuration ; and |

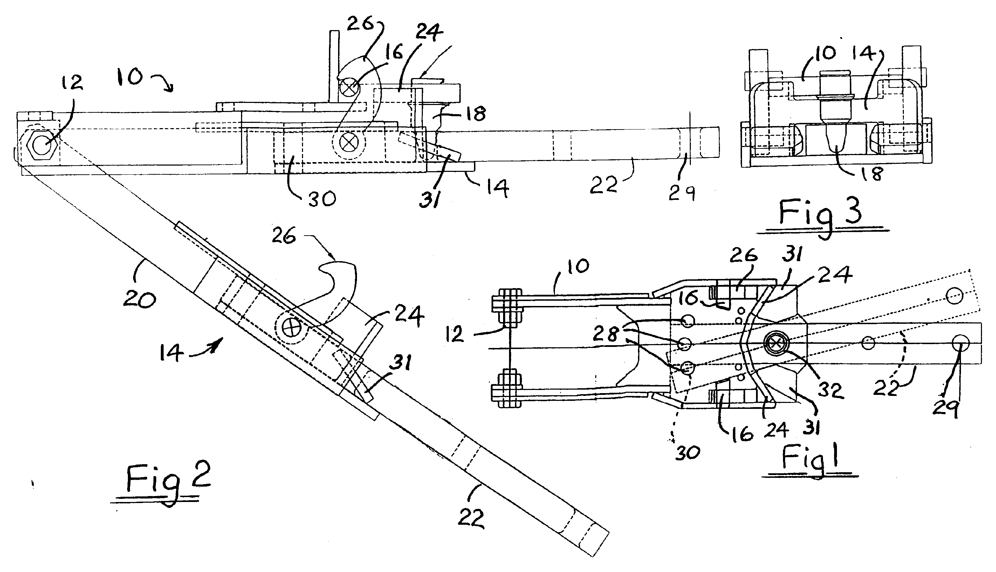

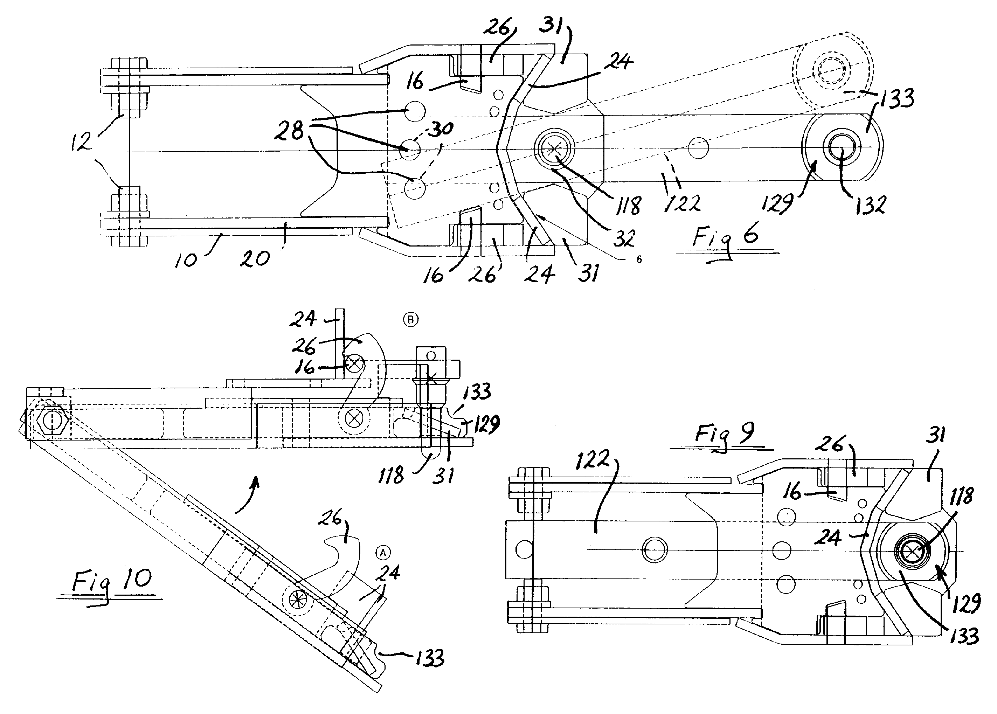

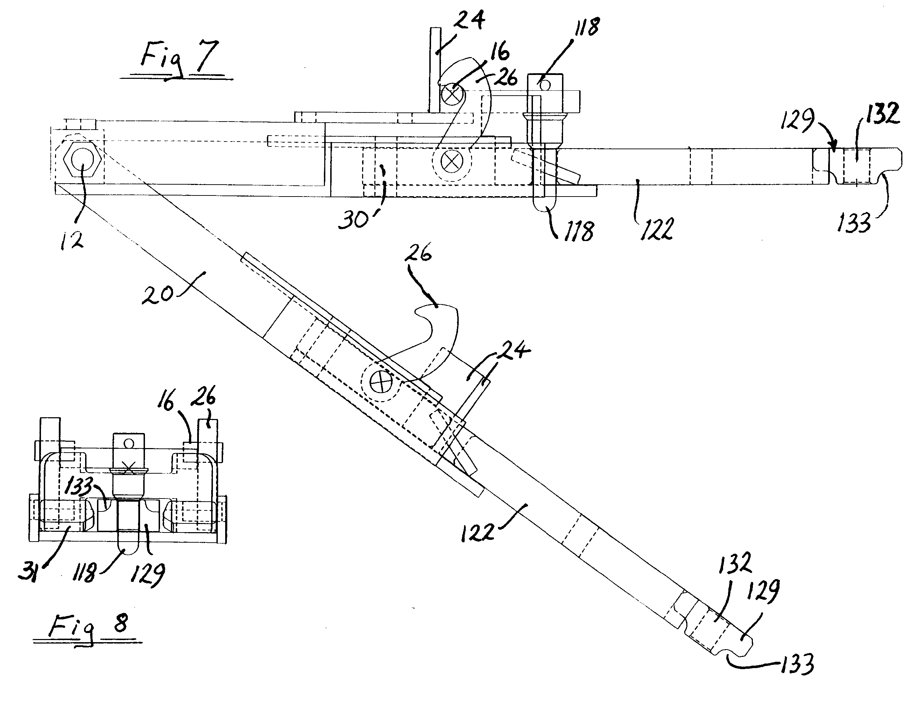

Figures 6 to 10    are views corresponding to those of Figs 1-5 respectively but of a second embodiment.

The assembly of Figs 1 to 5 has a fixed frame 10 which, in use, is connected to the rear of the tractor, and extends generally rearwardly thereof. Horizontal transverse pivot bars 12 are provided, one at each side, at the tractor-adjacent inner end of the frame 10. The fixed frame 10 is provided towards its outer end with a pair of detent bars 16, one at either side. Adjacent its outer end, the fixed frame 10 carries a fixed, downwardly projecting, engagement pin 18, the projecting portion of which is of tapered form (as can be seen most clearly in Fig. 3).

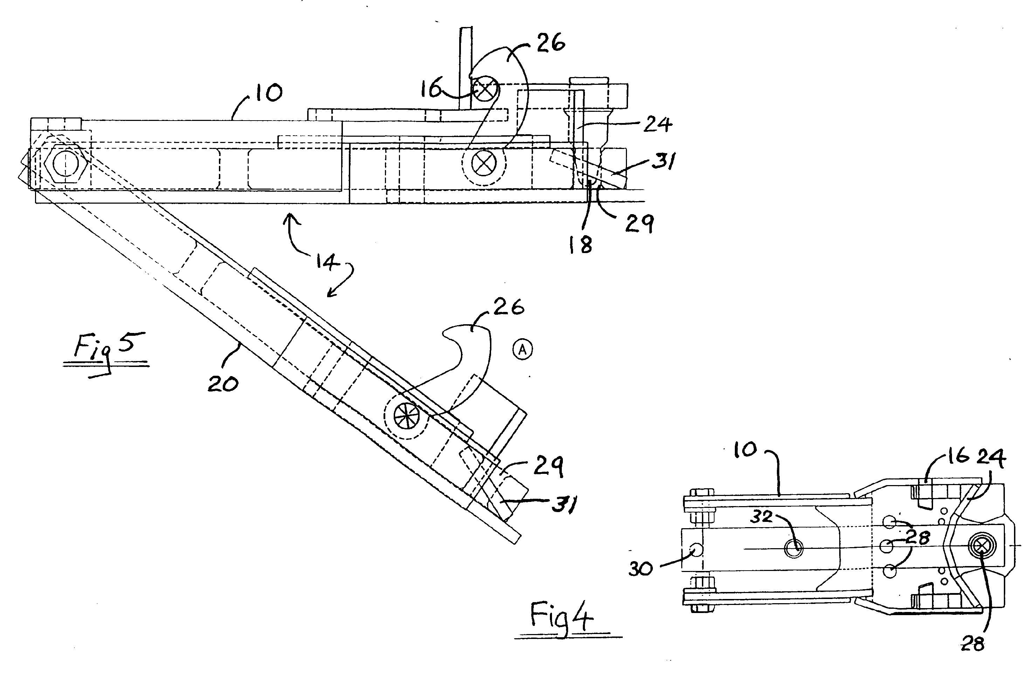

A movable hitch frame 14 has a rear carrier frame portion 20 and an elongate drawbar 22, the rear carrier frame portion 20 being pivotally connected to the fixed frame 10 by the pivot bars 12. (Figs. 2 and 5 show the hitch frame 14 in two different positions : parallel to and underlying the fixed frame 10 ; and extending downwardly and rearwardly from the pivot bars 12.) The carrier frame portion 20 has an upwardly projecting, generally V-shaped, guide piece 24 adjacent the outer end. Inwardly of this, at each side, there is an engagement hook 26. Still further inwardly, the frame portion 20 is penetrated by three apertures 28 disposed in an arc.

The drawbar is a simple elongate girder having an outer aperture 29 adjacent the outer end ; and an intermediate aperture 32.

From Fig. 5 it can be seen that the movable hitch frame 14, when in its lowered position, provides a gap between its rear portion (including the engagement hook 26 and the guide piece 24) and the underside of the fixed frame 10. With the drawbar 22 retracted as shown, its outer aperture 29 is aligned with the fixed engagement pin 18, such that if the hitch frame 14 is pivoted upwardly, the fixed pin 18 engages in the aperture 29. As this occurs, the engagement hooks 26 are engageable over the detent bars 16 of the fixed frame 10.

To couple the drawbar assembly to the towing ring of a trailer, the assembly is initially positioned as shown in Fig. 5, with the movable hitch frame pivoted downwardly. The tractor or other vehicle bearing the drawbar assembly is reversed up to the towing ring of the trailer until the ring is located approximately beneath the fixed engagement pin 18. Side cheeks 31 directed rearwardly and downwardly away from the bottom of the guide piece 24, assist in raising the towing ring and directing it into the desired position, the towing ring being also centralised by the wings of the guide piece 24. The movable hitch frame 14 is then pivoted upwardly. (In practice, it may be arranged for this to be done by hydraulic cylinders or by a mechanical linkage, powered by the tractor vehicle.) As the towing ring is lifted by the rising drawbar, it is (or continues to be) centralised by the wings of the guide piece 24. The continued pivoting of the hitch frame 14 causes the towing ring to be sandwiched between the drawbar 22 and the fixed frame 10, with the fixed engagement pin 18 passing through the towing ring and into the outer aperture 29 of the drawbar. In the course of this motion the hooks 26 are automatically engaged with the detent bars 16 to lock the hitch frame in the raised position, and consequently to lock the towing ring on the engagement pin 18. To release the engagement, hooks 26 are released from off the bars 16.

If it is desired to connect a power take-off driven implement, the configuration shown in Figs. 1 and 2 is employed. With the hitch frame 14 in the lowered position, the drawbar 22 is extended rearwardly. Upward pivoting of the hitch frame 14 then causes the fixed engagement pin 18 to pass through the intermediate aperture 32 of the drawbar. Thus the drawbar's degree of extension is securely fixed.

Nevertheless, the drawbar is capable of lateral pivoting — within the limits defined by the angled inner edges of the side cheeks 31 — and can be locked in a desired angular position by passing another pin (not shown) through the inner aperture 30 of the drawbar, and a selected one of the apertures 28 in the carrier frame portion 20. (It will be appreciated that the apertures 28 are disposed arcuately with respect to the pivotal axis of the drawbar in this configuration.) An implement can then be coupled to the outer end of the drawbar, using the outer aperture 29 thereof. This can either be by means of a simple pin connection or by means of a removable clevis having a portion to be attached to the drawbar 22 and an apertured portion to overlie the aperture 29.

It will be apparent that the pivoting of the drawbar 22 (in its extended configuration) about the fixed engagement pin 18 is easily effected and controlled by passing said other pin through one of the apertures 28 in the carrier frame portion 20, and that this can be done easily, from the rear of the tractor, without the need to perform intricate operations from underneath. Such pivotability of the drawbar 22 permits of easy acces to the PTO for equipment requiring such PTO drive, even with the towed implement or other article remaining coupled to the extended drawbar 22.

The assembly of Figs 1 to 5 is simple in construction and in use. The use of engagement pin 18 rather than a hook for engaging the towing ring of heavy trailers gives a secure coupling, with no risk that a trailer will be lost owing to failure of a hook closure plate. Even if a heavily laden trailer tends to exert an upward force on the drawbar assembly, the coupling is still entirely secure, since the towing ring is sandwiched between the fixed frame 10 and the moving frame 14. Furthermore, since the tapered engagement pin 18 is of simple form, it can be made inexpensively of a suitable hard material, and (for example) may be retained to the fixed frame 10 by a releasable connection (e.g. a thread), so that it can be readily replaced if worn or damaged.

The drawbar 22 is also of particularly simple form and it too can be made of a hard, relatively intractable material.

The design of the moving hitch frame 14 is such that little ground clearance is used up by it. The whole assembly is very slim.

Similar benefits and advantages arise with the embodiment of Figs 6 to 10. This has an engagement pin 118 of generally cylindrical (rather than tapered) form and projects downwards a greater distance than pin 18 of Figs 1-5. The drawbar 122 has a boss 129 welded to its outer end, this boss 129 having a cylidrical bore 132 therethrough to receive the engagement pin 118 in the drawbar assembly's retracted configuration. The exterior of boss 129 is provided with a circumferential concavity 133 to accomodate the toroidal shape of the conventional towing ring of a heavy trailer. When the drawbar assembly of Figs 6 to 10 is to be used in the extended configuration, the whole drawbar 122 is removed and rotated through 180° about its longitudinal axis so that the boss 129 is inverted (see Fig 7). This tends to avoid undue wear of the boss 129, particularly in the vicinity of circumferential concavity 133 and of the there-adjacent reduced area end face of the boss.

In another modification (not shown) the second portion is connected to the first portion such as to remain parallel to the first portion as it moves relative thereto in a vertical plane (instead of first and second portions being pivotally connected to one another as in the illustrated embodiments of Figs 1-5 and Figs 6-10). Such mutual separation and approach whilst remaining parallel can be obtained by providing telescopically slidable, vertical guide pieces between the first and second portions at longitudinally spaced locations.

## Claims

1. A drawbar assembly comprising a first portion (10) provided with an engagement pin (18 ; 118), and a second portion (14) connected to the first portion remote from said engagement pin (18 ; 118) and such as to be movable relative to the first portion in a vertical plane, **characterised in that** the said second portion (14) comprises a drawbar (22 ; 122) provided with first and second longitudinally spaced apertures (29, 132 ; 32) located at respectively outer and inner locations of the drawbar (22 ; 122), the drawbar (22 ; 122) being longitudinally displaceable such that said apertures (29, 132 ; 32) can selectively confront the engagement pin (18 ; 118) and such that (a) when the drawbar (22 ; 122) is in a retracted configuration the towing ring of a heavy trailer or other article to be connected is engageable by causing the engagement pin (18 ; 118) to project through the towing ring and into the said first aperture (29 ; 132), and (b) the drawbar (22 ; 122) is retainable in an extended configuration by engagement of the engagement pin (18 ; 118) in the said second aperture (32), the outer end of the drawbar then being engageable with a towed implement or other article to he connected (possibly using the said first aperture (29 ; 132)).

2. A drawbar assembly according to Claim 1, **characterised in that** the first and second portions (10, 14) are pivotally connected to one another remote from said engagement pin (18 ; 118) and such as to be movable as aforesaid.

3. A drawbar assembly according to Claim 1 or Claim 2, **characterised by** releasably engageable latch means (16, 26) to lock the first and second portions (10, 114) to one another with said engagement pin (18 ; 118) engaged in a selected one of said apertures (29, 132 ; 32).

4. A drawbar assembly according to any one of the preceding Claims, **characterised by** guide means (24, 31) for assisting in location of a towing ring of a trailer.

5. A drawbar assembly according to any one of the preceding Claims, **characterised in that** the drawbar (22 ; 122) is provided adjacent its outer end with a seating (129) having a shape conforming substantially to the shape of a conventional towing ring of a trailer.

6. A drawbar assembly according to Claim 5, **characterised in that** the seating (129) has a circumferentially concave portion (133) to accomodate a generally toroidal towing ring.

7. A drawbar assembly according to any one of the preceding Claims, **characterised in that** the second portion (14) comprises a frame (20), the drawbar (22 ; 122) being longitudinally displaceable relative to the frame (20) and selectively positionable in one of a plurality of angular positions relative to the frame (20).

8. A drawbar assembly according to Claim 7, **characterised in that** the drawbar (22 ; 122) has also a rearward aperture (30), further from the first aperture (29 ; 132) than from the second aperture (32), and in that the frame (20) has at least one corresponding aperture (28) such that the frame (20) and drawbar (22 ; 122) are connectable by another pin extending through the drawbar's rearward aperture (30) and the frame's corresponding aperture (28).

9. A drawbar assembly according to Claim 8, **characterised in that** the frame (20) has a plurality of said corresponding apertures (28) that are laterally spaced apart such that, in the extended configuration of the drawbar (22 ; 122), the drawbar (22 ; 122) can pivot about the said engagement pin (18 ; 118) of the first portion (10) to a plurality of angular positions in each of which it may be held by passing said other pin through the rear aperture (30) of the drawbar (22 ; 122) and into a selected one of said laterally spaced apertures (28) of the frame (20).

10. A tractor or other towing vehicle including a drawbar assembly according to any one of Claims 1 to 9.


**Patentansprüche**

1. Zugstangenanordnung mit einem ersten Abschnitt (10), der mit einem Eingriffszapfen (18 ; 118) versehen ist, und mit einem zweiten Abschnitt (14), der mit dem ersten Abschnitt entfernt von dem Eingriffszapfen (18 ; 118) und derart verbunden ist, daß er bezüglich des ersten Abschnitts in einer vertikalen Ebene beweglich ist, dadurch **gekennzeichnet,** daß der zweite Abschnitt (14) eine Zugstange (22 ; 122) aufweist, die mit ersten und zweiten in Längsrichtung im Abstand angeordneten Öffnungen (29, 132 ; 32) versehen ist, welche jeweils an äußeren und inneren Stellen der Zugstange (22 ; 122) angeordnet sind, wobei die Zugstange (22 ; 122) in Längsrichtung derart verschiebbar ist, daß die Öffnungen (29, 132 ; 32) selektiv dem Eingriffszapfen (18 ; 118) gegenüberliegen können und daß (a), wenn die Zugstange (22 ; 122) eine eingezogene Form hat, der Schleppring eines schweren Anhängers oder eines anderen zu verbindenden Gegenstands dadurch in Eingriff bringbar ist, daß der Eingriffszapfen (18 ; 118) zum Vorstehen durch den Schleppring und in die erste Öffnung (29; 132) gebracht wird, und daß (b) die Zugstange (22 ; 122) in einer ausgefahrenen Form durch Eingriff des Eingriffszapfens (18 ; 118) in die zweite Öffnung (32) haltbar ist, wobei das äußere Ende der Zugstange dann mit einem Anhängegerät oder einem anderen zu verbindenden Gegenstand in Eingriff bringbar ist, (möglicherweise unter Verwendung der ersten Öffnung (29 ; 132)).

2. Zugstangenanordnung nach Anspruch 1, dadurch **gekennzeichnet,** daß der erste und der zweite Abschnitt (10, 14) schwenkbar miteinander entfernt von dem Eingriffszapfen (18 ; 118) und derart verbunden sind, daß sie, wie oben erwähnt, beweglich sind.

3. Zugstangenanordnung nach Anspruch 1 oder Anspruch 2, **gekennzeichnet** durch lösbar in Eingriff bringbare Lascheneinrichtungen (16, 26) zur Arretierung des ersten und zweiten Abschnitts (10, 114) aneinander, wobei der Eingriffszapfen (18 ; 118) in eine aus den Öffnungen (29, 132 ; 32) ausgewählte Öffnung eingreift.

4. Zugstangenanordnung nach einem der vorhergehenden Ansprüche, **gekennzeichnet** durch Führungseinrichtungen (24, 31) zur Unterstützung der Positionierung eines Schlepprings elnes Anhängers.

5. Zugstangenanordnung nach einem der vorhergehenden Ansprüche, dadurch **gekennzeichnet,** daß die Zugstangen (22 ; 122) angrenzend an ihr äußeres Ende mit einem Sitz (129) versehen ist, der eine Form hat, die im wesentlichen der Form elnes herkömmllchen Abschlepprings eines Anhängers entspricht.

6. Zugstangenanordnung nach Anspruch 5, dadurch **gekennzeichnet,** daß der Sitz (129) einen in Umfangsrichtung konkaven Abschnitt (133) für die Aufnahme eines insgesamt toroiden Schlepprings hat.

7. Zugstangenanordnung nach einem der vorhergehenden Ansprüche, dadurch **gekennzeichnet,** daß der zweite Abschnitt (14) einen Rahmen (20) aufweist, wobei die Zugstange (22 ; 122) relativ zu dem Rahmen (20) in Längsrichtung verschiebbar und in einer Stellung aus einer Vielzahl von Winkelstellungen bezüglich des Rahmens (20) selektiv positionierbar ist.

8. Zugstangenanordnung nach Anspruch 7, dadurch **gekennzeichnet,** daß die Zugstange (22 ; 122) auch eine rückwärtige Öffnung (30) hat, die weiter von der ersten Öffnung (29 ; 132) als von der zweiten Öffnung (32) liegt, und daß der Rahmen (20) wenigstens eine entsprechende Öffnung (28) derart hat, daß der Rahmen (20) und die Zugstange (22 ; 122) durch einen weiteren Zapfen verbindbar sind, der sich durch die rückwärtige Öffnung (30) der Zugstange an die entsprechende Öffnung (28) des Rahmens erstreckt.

9. Zugstangenanordnung nach Anspruch 8, dadurch **gekennzeichnet,** daß der Rahmen (20) eine Vielzahl von entsprechenden Öffnungen (28) hat, die sich seitlich im Abstand voneinander so erstrecken, daß in der ausgefahrenen Stellung der Zugstange (22 ; 122) die Zugstange (22 ; 122) um den Eingriffszapfen (18 ; 118) des ersten Abschnitts (10) in eine Vielzahl von Winkelstellungen schwenken kann, wobei sie in jeder Winkelstellung gehalten werden kann, indem der andere Zapfen durch die rückwärtige Öffnung (30) der Zugstange (22 ; 122) und in eine aus den seitlich im Abstand angeordneten Öffnungen (28) des Rahmens (20) ausgewählte Öffnung geführt wird.

10. Traktor oder anderes Schleppfahrzeug mit einer Zugstangenanordnung nach einem der Ansprüche 1 bis 9.

## Revendications

1. Un dispositif à barre de traction comprenant une première partie (10) pourvue d'une cheville d'accouplement (18 ; 118), et une seconde partie (14) attachée à la première partie, à l'écart de ladite cheville d'accouplement (18, 118) et de façon à être mobile par rapport à la première partie dans un plan vertical, caractérisé en ce que ladite seconde partie (14) comprend une barre de traction (22 ; 122) pourvue des premier et second orifices espacés dans le sens longitudinal (29, 132 ; 32), situés respectivement à des endroits extérieur et intérieur de la barre de traction (22 ; 122), la barre de traction (22 ; 122) pouvant être déplacée dans le sens longitudinal, de manière à ce que lesdits orifices (29, 132, 32) puissent sélectivement faire face à la cheville d'accouplement (18 ; 118) et de telle façon que (a), lorsque la barre de traction (22 ; 122) se trouve dans une configuration rétractée, l'anneau de traction d'une lourde remorque ou autre article à connecter puisse être mis en prise en faisant passer la cheville d'accouplement (18 ; 118) au travers de l'anneau de traction et dans ledit orifice (29 ; 132), et que (b) la barre de traction (22 ; 122) puisse être retenue dans une configuration prolongée, par l'engagement de la cheville d'accouplement (18 ; 118) dans ledit second orifice (32), l'extrémité extérieure de la barre de traction pouvant alors être mise en prise avec un élément remorqué ou autre article à connecter (autant que possible en utilisant ledit premier orifice (29 ; 132)).

2. Un dispositif à barre de traction suivant la revendication 1, caractérisé en ce que les première et seconde parties (10, 14), sont connectées l'une à l'autre de manière à pouvoir pivoter, à l'écart de ladite cheville d'accouplement (18 ; 118) et de façon à être mobiles comme dit plus haut.

3. Un dispositif à barre de traction suivant la revendication 1 ou la revendication 2, caractérisé par des moyens d'enclenchement (16, 26) engageables, pouvant être relâchés, pour verrouiller les première et seconde parties (10, 114) l'une à l'autre au moyen de ladite cheville d'accouplement (18 ; 118) engagée dans un desdits orifices sélecté (29, 132 ; 329).

4. Un dispositif à barre de traction suivant une quelconque des revendications précédentes, caractérisé par des moyens de guidage (24, 31) pour contribuer à l'emplacement d'un anneau de traction d'une remorque.

5. Un dispositif à barre de traction suivant une quelconque des revendications précédentes, caractérisé en ce que la barre de traction (22 ; 122) est pourvue d'un siège (129) attenant à son extrémité extérieure, ayant une forme substantiellement conforme à la forme d'un anneau de traction conventionnel d'une remorque.

6. Un dispositif à barre de traction suivant la revendication 5, caractérisé en ce que la siège (129) présente une partie circonférentiellement concave (133) pour permettre d'ajuster un anneau de traction, en général de forme toroïdale.

7. Un dispositif à barre de traction suivant une quelconque des revendications précédentes, caractérisé en ce que la seconde partie (14) comprend un cadre (20), la barre de traction (22 ; 122) pouvant être déplacée dans le sens longitudinal par rapport au cadre (20) et pouvant être placé sélectivement dans une position d'une pluralité de positions angulaires par rapport au cadre (20).

8. Un dispositif à barre de traction suivant la revendication 7, caractérisé en ce que la barre de traction (22 ; 122) est également pourvue, vers l'arrière, d'un orifice (30), plus éloigné du premier orifice (29 ; 132) que du second orifice (32), et en ce que le cadre (20) présente au moins un orifice correspondant (28), de façon à ce que le cadre (20) et la barre de traction (22 ; 122) puissent être connectés par une autre cheville passant au travers de l'orifice vers l'arrière (30) de la barre de traction et de l'orifice correspondant du cadre (28).

9. Un dispositif à barre de traction suivant la revendication 8, caractérisé en ce que le cadre (20) présente une pluralité desdits orifices correspondants (28), lesquels sont latéralement espacés de façon à ce que la barre de traction (22 ; 122) puisse, dans la configuration prolongée de la barre de traction (22 ; 122), pivoter sur ladite cheville d'accouplement (18 ; 118) de la première partie (10) vers une pluralité de positions angulaires, dans chacune desquelles elle peut être maintenue en passant ladite autre cheville au travers de l'orifice arrière (30) de la barre de traction (22 ; 122) et dans un orifice sélecté desdits orifices latéralement espacés (28) du cadre (20).

10. Un tracteur ou un autre véhicule de traction comprenant un dispositif à barre de traction suivant une quelconque des revendications 1 à 9.

Fig 3

Fig 1

Fig 2

EP 0 308 271 B1

26

10

16

24

31

14

18

29

Fig 5

20

26

Ⓐ

29

31

10

16 24

32

28

30

Fig 4

28

Fig 6

Fig 9

Fig 10

Fig 7

Fig 8